# EUROPEAN PATENT APPLICATION

(11) **EP 4 571 976 A1**
(43) Date of publication of application: **18.06.2025**
(21) Application number: 22955326.8
(22) Date of filing: 18.08.2022
(51) Int. Cl.: H01M 50/249

(54) **BATTERY BOX, BATTERY AND VEHICLE**

(71) Applicant: Contemporary Amperex Technology Co., Limited, Ningde, Fujian 352100 (CN)
(72) Inventor: HE, Runyong, Ningde, Fujian 352100 (CN); WANG, Peng, Ningde, Fujian 352100 (CN); CHEN, Xingdi, Ningde, Fujian 352100 (CN); JI, Hongye, Ningde, Fujian 352100 (CN)
(74) Representative: Ziebig Hengelhaupt Intellectual Property Attorneys Patentanwaltskanzlei PartGmbB
(86) International application number: PCT/CN2022/113176
(87) International publication number: WO 2024/036545

(57) **Abstract**

The present application relates to a battery box, a battery, and a vehicle. In the design of the battery box, a bearing member is arranged between two adjacent longitudinal beams. With the support of the longitudinal beams, this allows for stable accommodation of battery cells between the bearing member and the cover. The longitudinal beams are connected to the vehicle body and extended along the length direction of the vehicle. In this way, the longitudinal beams of the present application not only serve as the supporting structure of the battery box, but can also directly serve as the supporting structure of the vehicle. By integrating the beam structure of the vehicle into the battery box to form an integrated design, the installation space for the battery in the vehicle is expanded.

## Description

### TECHNICAL FIELD

The present application relates to the technical field of batteries, and in particular to a battery box, a battery, and a vehicle.

### BACKGROUND

With energy saving and emission reduction being the key to the sustainable development of the automobile industry, electric vehicles have become an important part of the sustainable development of automotive industry due to their advantages of energy saving and environmental protection. For the electric vehicles, the battery technology is another important factor related to their development.

However, due to design flaws in the battery structure, the utilization rate of installation space for the battery on the vehicle is low, and the structure is complex.

### SUMMARY OF THE INVENTION

Based on this, it is necessary to provide a battery box, a battery, and a vehicle with an integrated structural design to expand the installation space for the battery on the vehicle.

In the first aspect, the present application provides a battery box, including: at least two longitudinal beams arranged at intervals, each of the longitudinal beams being configured to connect to a vehicle body of a vehicle; and a bearing member and a cover, where the bearing member is arranged between two adjacent ones of the longitudinal beams, battery cells are accommodated between the bearing member and the cover, and the bearing member is arranged closer to the vehicle body relative to the cover in a preset direction, where the longitudinal beams are close to one side of the vehicle body in the preset direction and protrude beyond the bearing member.

In the above battery box, the bearing member is arranged between two adjacent longitudinal beams. With the support of the longitudinal beams, this allows for accommodation of battery cells between the bearing member and the cover. The longitudinal beams can be connected to the vehicle body. In this way, the longitudinal beams of the present application not only serve as the supporting structure of the battery box, but can also directly serve as the supporting structure of the vehicle. By integrating the beam structure of the vehicle into the battery box to form an integrated design, the installation space for the battery in the vehicle is expanded. Additionally, the longitudinal beams protrude beyond the bearing member toward one side of the vehicle body in the preset direction. In this way, the structural design between the bearing member, the cover, and the vehicle body is reasonably arranged, so that the portions of the longitudinal beams protruding beyond the bearing member can be stably connected to the vehicle body, which is convenient for the installation of the battery on the vehicle. At the same time, designing the longitudinal beams to protrude beyond the bearing member also allows the longitudinal beams to better serve as the beam structure of the vehicle, thereby achieving stable and effective supporting functions.

In some embodiments, a height of a portion of the longitudinal beam protruding beyond the bearing member is h, where 5 millimeters (mm) ≤ h ≤ 200 millimeters (mm). In this way, the size of the portion of the longitudinal beam protruding beyond the bearing member can be reasonably controlled, which can ensure both a relatively convenient installation operation of the battery and a compact structure between the battery and the vehicle body.

In some embodiments, the height h of the portion of the longitudinal beam protruding beyond the bearing member meets: 20 mm ≤ h ≤ 100 mm. In this way, the size range of the portion of the longitudinal beam protruding beyond the bearing member is further reduced, making the installation operation of the battery more convenient and improving the installation efficiency of the battery. At the same time, while ensuring convenient installation, the gap between the vehicle body and the bearing member is reduced, further improving the structural compactness between the battery and the vehicle body.

In some embodiments, the battery box further includes transverse beams, the transverse beams being at least partially connected between portions of two adjacent ones of the longitudinal beams protruding beyond the bearing member. With such a design, the transverse beam is connected between portions of two adjacent longitudinal beams protruding beyond the bearing member, so that the portions protruding beyond the bearing member have lateral support, thereby improving the lateral crash rigidity of the longitudinal beams and achieving a safer overall vehicle design.

In some embodiments, the number of the transverse beams is at least two, with all of the transverse beams being arranged at intervals along an extension direction of the longitudinal beams. In this way, at least two transverse beams are arranged at intervals between two adjacent longitudinal beams, providing more support positions between the two adjacent longitudinal beams. This further improves the lateral crash rigidity of the battery and enhances the overall crash resistance performance of the entire vehicle.

In some embodiments, a portion of the longitudinal beam protruding beyond the bearing member has a connecting face, the connecting face being used for sealing connection with the vehicle body. With such a design, the connecting face is sealingly connected to the vehicle body, which helps achieve the waterproof sealing function inside the vehicle and enhances vehicle driving safety.

In some embodiments, a side face of the cover facing away from the bearing member includes a first surface, and a side face of the longitudinal beam facing away from the connecting face includes a second surface, the first surface being arranged to protrude beyond the second surface in the preset direction, with a sealing part being provided between the first surface and the second surface. The first surface is arranged to protrude beyond the second surface, facilitating the retention of adhesive between the longitudinal beam and the cover, thereby making the sealing operation between the first surface and the second surface more convenient.

In some embodiments, the battery box further includes mounting members, with the mounting members being provided on a side face of at least one of the longitudinal beams facing away from the battery cells. In this way, mounting members are arranged on the longitudinal beams, increasing the positions available for fixing on the battery, to allow additional functional devices to be attached to the battery.

In some embodiments, the number of the mounting members is at least two, with the mounting members being provided on each of side faces of two adjacent ones of the longitudinal beams facing away from the battery cells. In this way, mounting members are provided on each of two adjacent longitudinal beams, making the distribution of mounting points on the battery more reasonable.

In some embodiments, in the same longitudinal beam, the number of the mounting members is at least two, with all of the mounting members being arranged at intervals along the preset direction. In this way, multiple layers of mounting members are arranged in the same longitudinal beam, which facilitates the simultaneous connection of the multiple layers of mounting members with the vehicle body, thereby further improving the installation strength between the battery and the vehicle body.

In some embodiments, the battery box further includes two connecting beams, the two connecting beams being connected to two adjacent ones of the longitudinal beams at intervals and being both connected to the cover and the bearing member. In this way, the two connecting beams are connected at intervals between two adjacent longitudinal beams, which is beneficial to improving the structural strength of the battery box.

In a second aspect, the present application provides a battery, including battery cells and the battery box in any of above examples, where the battery cells are accommodated between the cover and the bearing member.

In a third aspect, the present application provides a vehicle, including a vehicle body and the above battery, where the longitudinal beam is connected to the vehicle body.

The above description is only an overview of the technical solution of the present application. In order to better understand the technical means of the present application and thus implement them according to the contents of the specification, and in order to make the above and other objectives, features and advantages of the present application more obvious and understandable, the following is the detailed description of the present application.

### BRIEF DESCRIPTION OF DRAWINGS

By reading the detailed description of the preferred implementations below, various other advantages and benefits will become apparent to those of ordinary skill in the art. The drawings are for the purpose of illustrating the preferred implementations only and are not to be considered a limitation to the present application. Moreover, in all of the drawings, the same components are indicated by the same reference numerals. In the drawings:
FIG. 1 is a structural schematic diagram of a vehicle provided in some embodiments of the present application;
FIG. 2 is a cross-sectional view of a battery provided in some embodiments of the present application;
FIG. 3 is a structural schematic diagram of a battery provided in some embodiments of the present application;
FIG. 4 is a structural schematic diagram of the mating of a battery with a vehicle body provided in some embodiments of the present application; and
FIG. 5 is a schematic enlarged diagram of a structure at a circle A in FIG. 2.

1000, vehicle; 100, battery; 200, controller; 300, motor; 400, vehicle body; 10, battery box; 11, longitudinal beam; 111, connecting face; 112, second surface; 12, bearing member; 13, cover; 131, first surface; 14, cavity; 15, sealing part; 16, transverse beam; 17, mounting member; 18, connecting beam; 20, battery cell; X, preset direction; Y, length direction.

### DETAILED DESCRIPTION

Embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meanings as those commonly understood by those skilled in the art to which the present application pertains to. the terms used herein are for the purpose of describing specific embodiments only, and are not intended to limit the present application. The terms "including" and "having" and any variations thereof in the description and claims of the present application and the aforementioned description of the drawings are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the description of the embodiments of the present application, the term "a plurality of" refers to two or more (including two). Similarly, "multiple groups" refers to two or more groups (including two groups), and "multiple pieces" refers to two or more pieces (including two pieces).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated device or element must have a specific orientation, be constructed and operate in a specific orientation, and therefore, cannot be understood as a limitation to the present application.

In the description of the embodiments of the present application, unless otherwise specified and limited, the technical terms "installation", "connected", "connection" and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skill in the art, the specific meanings of the above terms in the embodiments of the present application can be understood according to specific situations.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. As the application fields of the power batteries continue to expand, their market demand is also constantly expanding.

The applicant has observed that the longitudinal beams on the battery are typically used only as part of the space that accommodates the battery cells. During assembly (i.e., installation on the vehicle), the battery is usually fixed to the vehicle frame. However, in order to avoid structural interference, the longitudinal beams of the battery need to be staggered from the vehicle's side longitudinal beams on the vehicle frame. For example, in the sill frame structure of the entire vehicle, such a design not only complicates the vehicle structure but also causes this part of the side longitudinal beams to encroach on the space available for the battery in the vehicle. This reduces the utilization rate of installation space of the battery, limits the size of the battery, and negatively affects its energy density.

Based on this, in order to solve the problem that the original side longitudinal beam structure of the vehicle will occupy the installation space of the battery, the applicant has conducted in-depth research and designed a battery box. In this design, each of the longitudinal beams is connected to the vehicle body of the vehicle, and the longitudinal beams are close to one side of the vehicle body in a preset direction and protrude beyond the bearing member (12).

In the structural design of the battery box, the bearing member is arranged between two adjacent longitudinal beams. With the support of the longitudinal beams, this allows for stable accommodation of battery cells between the bearing member and the cover. During the assembly process, the longitudinal beams are connected to the vehicle body and extended along the length direction of the vehicle. In this way, the longitudinal beams of the present application not only serve as the supporting structure of the battery box, but can also directly serve as the supporting structure of the vehicle. By integrating the beam structure of the vehicle into the battery box to form an integrated design, the installation space for the battery in the vehicle is expanded.

The battery disclosed in the embodiments of the present application can be used, but not limited to, in an electrical apparatus, such as a vehicle, a ship, or an aircraft. A battery cell, battery, or the like having the battery disclosed in the present application may be used to form a power supply system for such an electrical apparatus.

For the convenience of description, the following embodiments are illustrated with an example in which the electrical apparatus according to an embodiment of the present application is a vehicle 1000.

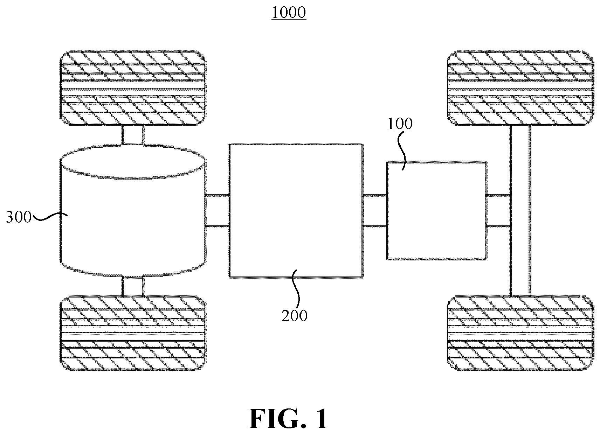

Referring to FIG. 1, FIG. 1 is a schematic structural diagram of a vehicle 1000 provided in some embodiments of the present application. The vehicle 1000 may be a fuel vehicle, a gas vehicle or a new energy vehicle. The new energy vehicle may be an all-electric vehicle, a hybrid vehicle, an extended range electric vehicle, or the like. A battery 100 is arranged in the vehicle 1000. The battery 100 may be arranged at the bottom or head or tail of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is configured to control the battery 100 to supply power to the motor 300, for example, to supply power for starting, navigation and driving of the vehicle 1000.

In some embodiments of the present application, the battery 100 not only can serve as an operating power source of the vehicle 1000, but also can serve as a driving power source of the vehicle 1000, thus replacing or partially replacing fuel or natural gas to provide driving power for the vehicle 1000.

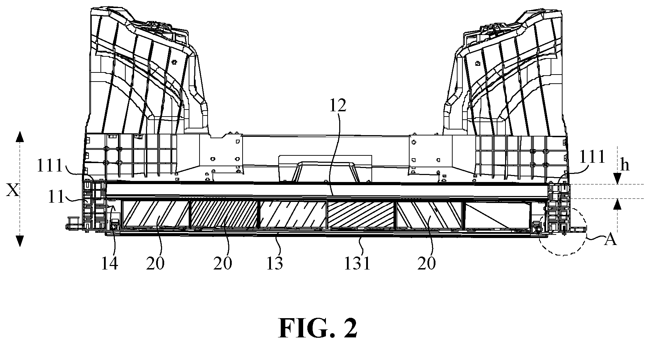

Referring to FIG. 2, FIG. 2 is a cross-sectional view of a battery 100 provided in some embodiments of the present application. The battery 100 includes a battery box 10 and battery cells 20, the battery cells 20 being accommodated within the battery box 10. The battery box 10 is used to provide an accommodating space for the battery cells 20, and the battery box 10 can adopt various structures. In some embodiments, the battery box 10 may include a cover 13 and a bearing member 12, where the cover 13 and the bearing member 12 cover each other, and the cover 13 and the bearing member 12 together define an accommodating space for accommodating the battery cells 20. The bearing member 12 may have a hollow structure with an open end, while the cover 13 may be of a plate-shaped structure. The cover 13 covers the open side of the bearing member 12, such that the cover 13 and the bearing member 12 together define the accommodating space. Alternatively, both the cover 13 and the bearing member 12 may each be of a hollow structure with an open side, where the open side of the cover 13 covers the open side of the bearing member 12. Of course, the battery box 10 formed by the cover 13 and the bearing member 12 may take various shapes, such as cylindrical, cuboidal, and others.

In the battery 100, there may be a plurality of battery cells 20, and the plurality of battery cells 20 can be connected in series or in parallel or in parallel-series connection, where the parallel-series connection means that the plurality of battery cells 20 are connected in both series and parallel. The plurality of battery cells 20 can be directly connected together in series or in parallel or in parallel-series connection, and then the entirety composed of the plurality of battery cells 20 can be accommodated within the battery box 10. Of course, the battery 100 may also be in the form of a battery 100 module first formed by the plurality of battery cells 20 being connected in series or in parallel or in parallel-series connection, then multiple battery 100 modules can be connected in series or in parallel or in parallel-series connection to form an entirety, and accommodated within the battery box 10. The battery 100 may further include other structures, for example, the battery 100 may further include a busbar component for realizing electrical connections between the plurality of battery cells 20.

Each battery cell 20 may be a secondary battery 100 or a primary battery 100; or it may be a lithium-sulfur battery 100, a sodium-ion battery 100 or a magnesium-ion battery 100, but is not limited thereto. The battery cells 20 may be cylindrical, flat, rectangular, or in other shapes.

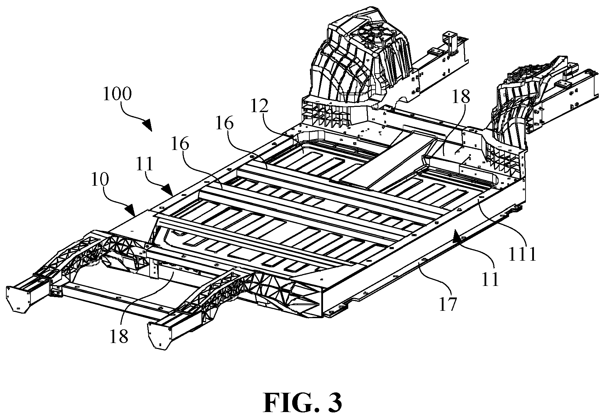

According to some embodiments of the present application, and with reference to FIG. 3, the present application provides a battery box 10. The battery box 10 includes at least two longitudinal beams 11, a bearing member 12, and a cover 13. The longitudinal beams 11 are arranged at intervals relative to the others, and each longitudinal beam 11 is configured to connect to the vehicle body 400 of the vehicle 1000. The bearing member 12 is arranged between two adjacent longitudinal beams 11. The battery cells 20 are accommodated between the bearing member 12 and the cover 13. The bearing member 12 is arranged closer to the vehicle body 400 relative to the cover 13 in a preset direction X, where the longitudinal beams 11 are close to one side of the vehicle body 400 in the preset direction X and protrude beyond the bearing member 12.

The accommodating space between the bearing member 12 and the cover 13 is defined as a cavity 14. This is, the longitudinal beams 11 form part of the structure of the cavity 14 and provide the primary load-bearing support for the installation of the battery cells 20. The materials for the longitudinal beams 11 can be designed in various ways, such as but not limited to: aluminum alloy or stainless steel. Of course, to balance the weight and structural strength of the longitudinal beams 11, the longitudinal beams 11 can be designed in an internal multi-ribbed structure or similar structures.

The bearing member 12 and the cover 13 refer to the upper and lower structures of the cavity 14, respectively, providing a closed space for the battery cell 20 to achieve effective protection. The fixation of the battery cells 20 between the bearing member 12 and the cover 13 can take various forms. For example, the battery cells 20 can be fixed to the bearing member 12; or the battery cells 20 can be fixed to the cover 13; or alternatively, both ends of the battery cells 20 can be fixed to the bearing member 12 and the cover 13, respectively.

The connection methods of the bearing member 12 and the cover 13 to the longitudinal beams 11 can be designed in various ways. For example, the connection methods of the bearing member 12 and the cover 13 to the longitudinal beams 11 may include, but are not limited to, bolt connection, snap-fit connection, welding, riveting, adhesive bonding, or integral molding, and so on. Among them, integral molding may involve processes such as casting, die casting, or a combination of stamping and bending.

The longitudinal beams 11 are connected to the vehicle body 400 of the vehicle 1000 and extend along the length direction Y of the vehicle 1000. In this way, on the vehicle 1000, the longitudinal beams 11 can directly serve as the side longitudinal beams 11 of the entire vehicle. For example, the longitudinal beams 11 can be the beam structure of the vehicle sill frame, integrating the vehicle side beam structure of the vehicle 1000 into the battery box 10. This simplifies the beam structure on the vehicle 1000, provides more space for the installation of the battery box 10, and facilitates the design of a larger battery box 10. The length direction Y of the vehicle 1000 can be understood as: the direction from the rear of the vehicle 1000 to the front of the vehicle 1000, or alternatively, the direction from the front of the vehicle 1000 to the rear of the vehicle 1000. The vehicle body 400 of the vehicle 1000 refers to the part of the vehicle used to carry passengers or cargo. The vehicle body 400 includes components such as windows, doors, the cockpit, the passenger compartment, the engine compartment, and the luggage compartment. It is a load-bearing vehicle body 400 without a rigid vehicle frame or similar structures.

The bearing member 12 being arranged closer to the vehicle body 400 relative to the cover 13 can be understood as follows: when the battery 100 is mounted on the vehicle 1000, the bearing member 12 is located between the cover 13 and the vehicle body 400. The installation method of the battery 100 on the vehicle 1000 can be either upright installation or inverted installation. Here, "inverted installation" should be understood as the battery 100 being installed with its top facing downward (e.g., toward the ground) on the vehicle 1000. In some specific embodiments, one end of the battery cells 20 facing away from the terminal posts is fixed to the bearing member 12.

The longitudinal beams 11 are designed to protrude beyond the bearing member 12 in the preset direction X, facilitating the direct installation of the longitudinal beams 11 onto the vehicle body 400. At the same time, the protruding portions can also serve as beam structures on the vehicle 1000, providing stable and effective support. Additionally, to facilitate better connection of the longitudinal beams 11 to the vehicle body 400 and to enhance the load-bearing capability of the longitudinal beams 11, each longitudinal beam 11 can be extended along the length direction Y of the vehicle 1000.

The longitudinal beams 11 are connected to the vehicle body 400. In this way, the longitudinal beams 11 of the present application not only serve as the supporting structure of the battery box 10 but can also directly serve as the supporting structure of the vehicle 1000. By integrating the beam structure of the vehicle 1000 into the battery box 10 to form an integrated design, the installation space for the battery 100 in the vehicle 1000 is expanded. Additionally, the structural design between the bearing member 12, the cover 13, and the vehicle body 400 is reasonably arranged, so that the portions of the longitudinal beams 11 protruding beyond the bearing member 12 can be stably connected to the vehicle body 400, which is convenient for the installation of the battery 100 on the vehicle 1000. At the same time, designing the longitudinal beams 11 to protrude beyond the bearing member 12 also allows the longitudinal beams 11 to better serve as the beam structure of the vehicle 1000, thereby achieving stable and effective supporting functions.

According to some embodiments of the present application, referring to FIG. 3, a height of a portion of the longitudinal beam 11 protruding beyond the bearing member 12 is h, where 5 mm ≤ h ≤ 200 mm.

If the height h of the portion of the longitudinal beam 11 protruding beyond the bearing member 12 is too small, the height difference between the surface of the bearing member 12 and the longitudinal beam 11 is relatively small, which leads to certain structural interference caused by the bearing member 12 when the longitudinal beam 11 is mounted on the vehicle body 400, thereby making the installation operation of the battery 100 less convenient. Conversely, if the height h of the portion of the longitudinal beam 11 protruding beyond the bearing member 12 is too large, it will increase the gap between the bearing member 12 and the vehicle body 400, resulting in a less compact structure.

For this reason, the height h of the portion of the longitudinal beam 11 protruding beyond the bearing member 12 can take any value within the range of 5 mm to 200 mm, for example: the height h of the portion of the longitudinal beam 11 protruding beyond the bearing member 12 can be 5 mm, 7 mm, 9 mm, 10 mm, 20 mm, 30 mm, 40 mm, 50 mm, 100 mm, 150 mm, 200 mm, etc.

The size of the portion of the longitudinal beam 11 protruding beyond the bearing member 12 can be reasonably controlled, which can ensure both a relatively convenient installation operation of the battery 100 and a compact structure between the battery 100 and the vehicle body 400.

According to some embodiments of the present application, and with reference to FIG. 3, the height h of the portion of the longitudinal beam 11 protruding beyond the bearing member 12 meets: 20 mm ≤ h ≤ 100 mm.

The height h of the portion of the longitudinal beam 11 protruding beyond the bearing member 12 can take any value within the range of 20 mm to 100 mm, for example: the height h of the portion of the longitudinal beam 11 protruding beyond the bearing member 12 can be 20 mm, 30 mm, 40 mm, 50 mm, 60 mm, 70 mm, 80 mm, 90 mm, 100 mm, etc.

The size range of the portion of the longitudinal beam 11 protruding beyond the bearing member 12 is further reduced, making the installation operation of the battery 100 more convenient and improving the installation efficiency of the battery 100. At the same time, while ensuring convenient installation, the gap between the vehicle body 400 and the bearing member 12 is reduced, further improving the structural compactness between the battery 100 and the vehicle body 400.

According to some embodiments of the present application, referring to FIG. 3, the battery box 10 further includes transverse beams 16. The transverse beams 16 are at least partially connected between portions of two adjacent ones of the longitudinal beams 11 protruding beyond the bearing member 12.

If the portions of the longitudinal beams 11 protruding beyond the bearing members 12 lack structural support, they are prone to deformation from lateral crash. For this reason, the transverse beams 16 are connected between portions of two adjacent longitudinal beams 11 protruding beyond the bearing member 12, thereby providing structural support between the two adjacent longitudinal beams 11, which can enhance the lateral impact resistance of the longitudinal beams 11. When the battery 100 is mounted on the vehicle body 400, the transverse beams 16 can serve as the supporting structure for the seat. For example, the transverse beams 16 serve as the transverse beams 16 for the seat of the entire vehicle.

The positions where the transverse beams 16 are connected to the portions of the longitudinal beams 11 protruding beyond the bearing member 12 (hereinafter referred to as protruding portions of the longitudinal beams 11) can vary. For example, one end of the transverse beam 16 may be connected to the end of the longitudinal beam 11 facing the vehicle body 400, i.e., the top face of the protruding portion of the longitudinal beam 11. Alternatively, one end of the transverse beam 16 may abut against the side face of the protruding portion of the longitudinal beam 11 facing the cavity 14, and so on.

The connection methods between the transverse beams 16 and the longitudinal beams 11 may include, but are not limited to, bolted connections, snap-fit connections, riveting, welding, pin connections, integral molding, and so on.

The transverse beam 16 is connected between portions of two adjacent longitudinal beams 11 protruding beyond the bearing member 12, so that the portions protruding beyond the bearing member 12 have lateral support, thereby improving the lateral crash rigidity of the longitudinal beams 11 and achieving a safer overall vehicle design.

According to some embodiments of the present application, referring to FIG. 3, the number of transverse beams 16 is at least two. All transverse beams 16 are arranged at intervals along the extension direction of the longitudinal beams 11.

The extension direction of the longitudinal beams 11 can also be understood as the length direction Y of the vehicle body 400. When the transverse beams 16 are arranged at intervals along the extension direction of the longitudinal beams 11, the spacing between two adjacent transverse beams 16 can be determined based on the size of the battery 100.

At least two transverse beams 16 are arranged at intervals between two adjacent longitudinal beams 11, providing more support positions between the two adjacent longitudinal beams 11. This further improves the lateral crash rigidity of the battery 100 and enhances the overall crash resistance performance of the entire vehicle.

According to some embodiments of the present application, please refer to FIG. 3, a portion of the longitudinal beam 11 protruding beyond the bearing member 12 has a connecting face 111, the connecting face 111 being used for sealing connection with the vehicle body 400.

The connecting face 111 can be either a flat face or a curved face, as long as it can achieve a sealed connection with the vehicle body 400. The sealed connection should be understood as follows: the connecting face 111 is connected to the vehicle body 400, and the two are in sealed mating. No specific limitation is imposed on achieving the sealing effect through the sealed mating. For example, it can be defined using automotive waterproofing rating, such as IP67 waterproofing.

There are various methods for achieving sealed mating, for example: designing the connecting face 111 to be a face closely conform to the vehicle body 400, allowing it to directly fit onto the vehicle body 400; or placing sealing materials, such as glue or filler rubber strips, between the connecting face 111 and the vehicle body 400. At the same time, the connection methods between the connecting face 111 and the vehicle body 400 may include, but are not limited to, bolted connections, snap-fit connections, riveting, welding, and so on.

Sealingly connecting the connecting face 111 to the vehicle body 400 helps achieve the waterproof sealing function inside the vehicle 1000, thereby enhancing the driving safety of the vehicle 1000.

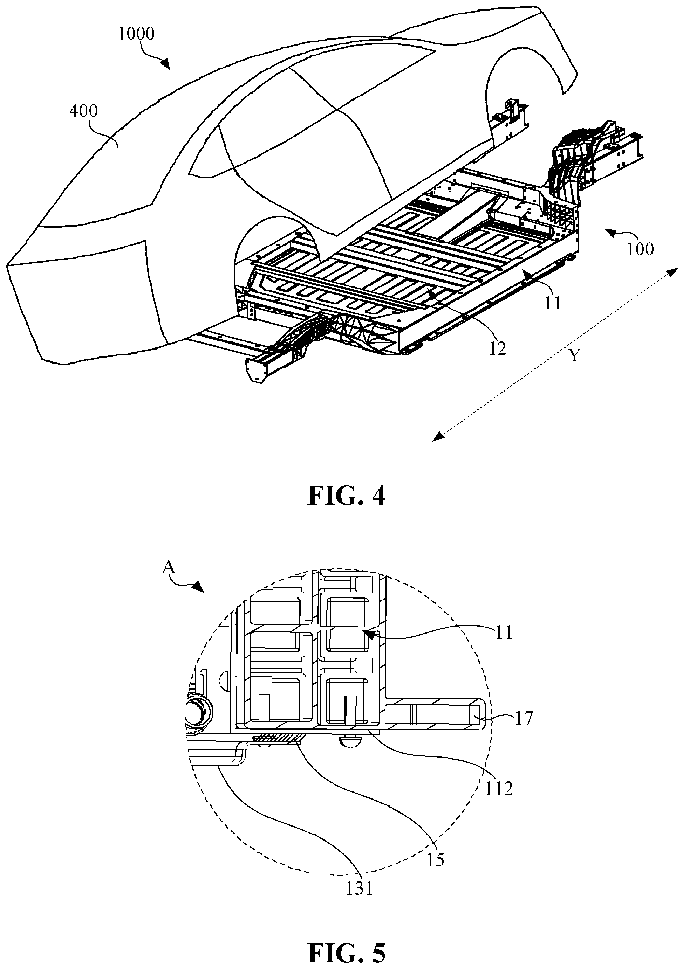

According to some embodiments of the present application, referring to FIG. 5, a side face of the cover 13 facing away from the bearing member 12 includes a first surface 131. A side face of the longitudinal beam 11 facing away from the connecting face 111 includes a second surface 112. The first surface 131 is arranged to protrude beyond the second surface 112 in the preset direction X, with a sealing part 15 being provided between the first surface 131 and the second surface 112.

The first surface 131 protrudes beyond the second surface 112 in the preset direction X, which can also be understood as the second surface 112 not extending beyond the first surface 131 in the preset direction X. In this way, a step approximately in the shape of an "L" is formed between the longitudinal beam 11 and the cover 13, facilitating the retention of adhesive between the longitudinal beam 11 and the cover 13 and making the sealing operation between the first surface 131 and the second surface 112 more convenient.

Arranging the first surface 131 to protrude beyond the second surface 112 also indicates that the cover 13 is positioned on the longitudinal beam 11 as far away from the bearing member 12 as possible. Under this arrangement, while ensuring a certain space between the cover 13 and the bearing member 12, the bearing member 12 and the cover 13 can be lowered as a whole, thereby creating conditions for the longitudinal beam 11 to protrude beyond the bearing member 12.

The first surface 131 is arranged to protrude beyond the second surface 112, facilitating the retention of adhesive between the longitudinal beam 11 and the cover 13, thereby making the sealing operation between the first surface 131 and the second surface 112 more convenient.

According to some embodiments of the present application, referring to FIG. 3, the battery box 10 further includes mounting members 17. The mounting members 17 are provided on a side face of at least one of the longitudinal beams 11 facing away from the battery cells 20.

In two adjacent longitudinal beams 11, the mounting member 17 can be arranged on only one of them, or the mounting member 17 can be arranged on both. The connection methods between the mounting members 17 and the longitudinal beams 11 may include, but are not limited to, bolted connections, snap-fit connections, riveting, welding, pin connections, integral molding, and so on. The structure of arranging the mounting members 17 on the longitudinal beams 11 can be a complete structure. This is, the mounting member 17 extends along the extension direction of the longitudinal beam 11. Of course, the structure of arranging the mounting members 17 on the longitudinal beams 11 can also be formed by arranging multiple segments of structures at intervals. For example, the mounting member 17 includes mounting segments arranged at intervals along the extension direction of the longitudinal beam 11.

The purpose of arranging the mounting members 17 on the vehicle 1000 can be determined according to the actual needs. For example, sampling devices for the battery 100, such as voltage sampling and temperature sampling, can be fixed on the mounting members 17. The mounting members 17 can also be fastened to the vehicle body 400, or the water cooling system of the battery 100 can be fixed on the mounting member 17, and so on.

There are multiple design options for the positions of the mounting members 17 on the longitudinal beams 11. For example, it is preferable to have as small a height difference as possible between the mounting members 17 and the bearing member 12.

By arranging the mounting members 17 on the longitudinal beams 11, the positions available for fixing on the battery 100 is increased, allowing additional functional devices to be attached to the battery 100. At the same time, fastening the mounting members 17 to the vehicle body 400 can further improve the installation stability of the battery 100.

According to some embodiments of the present application, referring to FIG. 3, the number of the mounting members 17 is at least two. The mounting members 17 being provided on each of side faces of two adjacent ones of the longitudinal beams 11 facing away from the battery cells 20.

The mounting members 17 connected respectively to two adjacent longitudinal beams 11 can be maintained at the same height or at different heights. Of course, if the mounting members 17 on the two adjacent longitudinal beams 11 are maintained at the same height, the structural distribution of the battery 100 will be more reasonable.

By arranging the mounting members 17 on both of the two adjacent longitudinal beams 11, the distribution of mounting points on the battery 100 becomes more reasonable, thereby improving the bonding strength between the battery 100 and the vehicle body 400.

According to some embodiments of the present application, in the same longitudinal beam 11, the number of the mounting members 17 is at least two, with all of the mounting members 17 being arranged at intervals along the preset direction X.

In the same longitudinal beam 11, the spacing between multiple layers of mounting members 17 is not specifically limited and can be determined based on the actual dimensions of the longitudinal beams 11. At the same time, arranging multiple layers of longitudinal beams 11 sequentially from top to bottom in the same longitudinal beam 11 also facilitates improving the structural strength between the battery 100 and the vehicle body 400.

Multiple layers of mounting members 17 are arranged in the same longitudinal beam 11, which facilitates the simultaneous connection of the multiple layers of mounting members 17 with the vehicle body 400, thereby further improving the installation strength between the battery 100 and the vehicle body 400.

According to some embodiments of the present application, referring to FIG. 3, the battery box 10 further includes two connecting beams 18, the two connecting beams 18 being connected to two adjacent ones of the longitudinal beams 11 at intervals and being both connected to the cover 13 and the bearing member 12.

When two connecting beams 18 are connected between two adjacent longitudinal beams 11, a rectangular frame structure is formed. At this time, the cover 13 and the bearing member 12 are not only connected between the two adjacent longitudinal beams 11 but are also both connected to the two connecting beams 18, making the structure of the battery box 10 formed as such to be more robust.

The two connecting beams 18 are connected at intervals between two adjacent longitudinal beams 11, which is beneficial to improving the structural strength of the battery box 10.

According to some embodiments of the present application, referring to FIG. 3, the present application provides a battery 100. The battery 100 includes the battery cells 20 as well as the battery box 10 in any of the above solutions. The battery cells 20 are accommodated between the cover 13 and the bearing member 12.

According to some embodiments of the present application, referring to FIG. 1, the present application provides a vehicle 1000. The vehicle 1000 includes the vehicle body 400 and the battery 100 as described above, where the longitudinal beams 11 are connected to the vehicle body 400.

According to some embodiments of the present application, referring to FIGS. 2 to 5, the present application provides a battery box 10, where the top surface of the longitudinal beam 11 is higher than the highest bearing member 12 of the battery 100, and the protruding portion is connected to the transverse beam 16 for the seat of the entire vehicle, significantly enhancing the impact resistance of the longitudinal beam 11. The top surface of the longitudinal beam 11 is connected to the vehicle body 400 of the entire vehicle, and the connecting face 111 can be sealed using glue, sealing rings, or other means, thereby achieving a waterproof sealing function inside the vehicle cabin. There are mounting members 17 on the outer side face of the longitudinal beam 11, which are fastened to the vehicle body 400 of the entire vehicle, improving the connection stiffness between the pack of batteries 100 and the entire vehicle. The side-mounted attachments can be arranged in multiple layers, and it is preferable that the height difference between the side-mounted attachments and the bearing plate of the pack of batteries 100 is as small as possible. The bottom surface of the longitudinal beam 11 is connected to the cover 13 of the battery 100, achieving sealing through glue, sealing pads, or similar methods.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments may still be modified, or some or all of the technical features therein may be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A battery box (10), comprising:
at least two longitudinal beams (11) arranged at intervals, each of the longitudinal beams (11) being configured to connect to a vehicle body (400) of a vehicle (1000); and
a bearing member (12) and a cover (13), wherein the bearing member (12) is arranged between two adjacent ones of the longitudinal beams (11), battery cells (20) are accommodated between the bearing member (12) and the cover (13), and the bearing member (12) is arranged closer to the vehicle body (400) relative to the cover (13) in a preset direction (X);
wherein the longitudinal beams (11) are close to one side of the vehicle body (400) in the preset direction (X) and protrude beyond the bearing member (12).

2. The battery box (10) according to claim 1, wherein a height of a portion of the longitudinal beam (11) protruding beyond the bearing member (12) is h, with 5 mm ≤ h ≤ 200 mm.

3. The battery box (10) according to claim 2, wherein the height h of the portion of the longitudinal beam (11) protruding beyond the bearing member (12) meets: 20 mm ≤ h ≤ 100 mm.

4. The battery box (10) according to claim 1, wherein the battery box (10) further comprises transverse beams (16), the transverse beams (16) being at least partially connected between portions of two adjacent ones of the longitudinal beams (11) protruding beyond the bearing member (12).

5. The battery box (10) according to claim 4, wherein the number of the transverse beams (16) is at least two, with all of the transverse beams (16) being arranged at intervals along an extension direction of the longitudinal beams (11).

6. The battery box (10) according to claim 1, wherein a portion of the longitudinal beam (11) protruding beyond the bearing member (12) has a connecting face (111), the connecting face (111) being used for sealing connection with the vehicle body (400).

7. The battery box (10) according to claim 6, wherein a side face of the cover (13) facing away from the bearing member (12) comprises a first surface (131), and a side face of the longitudinal beam (11) facing away from the connecting face (111) comprises a second surface (112), the first surface (131) being arranged to protrude beyond the second surface (112) in the preset direction (X), with a sealing part (15) being provided between the first surface (131) and the second surface (112).

8. The battery box (10) according to claim 1, wherein the battery box (10) further comprises mounting members (17), with the mounting members (17) being provided on a side face of at least one of the longitudinal beams (11) facing away from the battery cells (20).

9. The battery box (10) according to claim 8, wherein the number of the mounting members (17) is at least two, with the mounting members (17) being provided on each of side faces of two adjacent ones of the longitudinal beams (11) facing away from the battery cells (20).

10. The battery box (10) according to claim 8, wherein in the same longitudinal beam (11), the number of the mounting members (17) is at least two, with all of the mounting members (17) being arranged at intervals along the preset direction (X).

11. The battery box (10) according to any one of claims 1 to 10, wherein the battery box (10) further comprises two connecting beams (18), the two connecting beams (18) being connected to two adjacent ones of the longitudinal beams (11) at intervals and being both connected to the cover (13) and the bearing member (12).

12. A battery (100), comprising the battery cells (20) and the battery box (10) according to any one of claims 1 to 11, wherein the battery cells (20) are accommodated between the cover (13) and the bearing member (12).

13. A vehicle (1000), comprising the vehicle body (400) and the battery (100) according to claim 12, wherein the longitudinal beams (11) are connected to the vehicle body (400).
